# EUROPÄISCHE PATENTSCHRIFT

(11) **EP 3 999 339 B1**
(45) Veröffentlichungstag und Bekanntmachung des Hinweises auf die Patenterteilung: **07.06.2023**
(21) Anmeldenummer: 21742323.5
(22) Anmeldetag: 30.06.2021
(51) Int. Cl.: B32B 27/08, B32B 27/32, B32B 27/36, B32B 3/04, B60K 37/04

(54) **EINEN SCHICHTAUFBAU AUFWEISENDES SICHTTEIL FÜR EIN BEDIENTEIL ODER EINE ZIERBLENDE MIT VERBESSERTEM SCHUTZ DURCH EINE SCHUTZLACKBESCHICHTUNG**
VISIBLE PART HAVING A LAYERED STRUCTURE FOR AN OPERATING PART OR A DECORATIVE PANEL WITH IMPROVED PROTECTION BY MEANS OF A PROTECTIVE LACQUER COATING
PARTIE VISIBLE À STRUCTURE STRATIFIÉE POUR UN ÉLÉMENT D'EXPLOITATION OU UN PANNEAU DE DÉCORATION AVEC PROTECTION AMELIORÉE AU MOYEN D'UN REVÊTEMENT DE LAQUE DE PROTECTION

(30) Priorität: 10.07.2020 DE 102020004172; 17.08.2020 DE 102020121563
(43) Veröffentlichungstag der Anmeldung: 25.05.2022
(73) Patentinhaber: Preh GmbH, 97616 Bad Neustadt a.d. Saale (DE)
(72) Erfinder: HEIL, Hans-Karl, 97772 Wildflecken (DE); GOTTWALT, Dieter, 97640 Oberstreu (DE); STEINMÜLLER, Holger, 97618 Unsleben (DE); KESSLER, Andre, 97711 Poppenlauer (DE); SÜNNEMANN, Martin, 97633 Höchheim (DE)
(74) Vertreter: Lohmanns, Bernard
(86) Internationale Anmeldenummer: PCT/EP2021/068073
(87) Internationale Veröffentlichungsnummer: WO 2022/008324

(56) Entgegenhaltungen:
- DE-A1-102010 033 206
- DE-A1-102017 120 152
- DE-A1-102018 124 891

## Beschreibung

Die Erfindung betrifft eine Sichtteil für ein Bedienteil oder eine Zierblende, wobei das Sichtteil einen Schichtaufbau aufweist. Beispielsweise handelt es sich um eine Kunststoffblende, insbesondere eine Kunststoffblende für ein Bedienteil. Die Erfindung betrifft ferner ein Verfahren zur Herstellung eines solchen Sichtteils. Sichtteile für ein Bedienteil oder eine Zierblende, insbesondere zur Verwendung bei einem Kraftfahrzeug, wie im Kraftfahrzeuginnenraum, weisen regelmäßig jeweils einen Schichtaufbau aus einer transparenten oder transluzenten Deckschicht, einer Trägerschicht und einer zwischen Deck- und Trägerschicht angeordneten Dekorschicht auf. Die Deckschicht hat üblicherweise die Aufgabe, nicht nur die Dekorschicht, beispielsweise in Kombination mit einer Schutzlackschicht, vor Beschädigungen zu schützen, sondern auch dem Schichtaufbau "optische Tiefe" zu verleihen, was dem Bedienteil bzw. der Zierblende optische Attraktivität verleiht und dem optischen Eindruck nahekommt, wie er durch einen Glaswerkstoff erreicht wird. Letzterer wird aber aus Gründen einer möglichen Verletzung bei Bruch nicht eingesetzt. Daher werden solche Schichtaufbauten in der Regel durch stoffschlüssig verbundene Kunststoffschichten realisiert, beispielsweise durch Folienhinterspritzen, wobei die Folie eine Schicht des Schichtaufbaus ausbildet. Diese Schichtaufbauten bergen das Problem, dass insbesondere an den Stirnflächen des Schichtaufbaus, also an den Rändern des Schichtaufbaus, es zu einem Ablösen der Schichten oder es zu einer Rissbildung kommt. Diese Rissbildung kann sich einerseits durch innere, beispielsweise durch den Herstellungsprozess in den Schichtaufbau eingeprägte Spannungen in den einzelnen Schichten ergeben, aber auch durch äußere Einwirkungen, wie durch Temperaturschwankungen im Fahrzeuginneren oder durch Einwirken von Lösungsmitteln aus chemischen Reinigern, beschleunigt werden. Aufgrund der Transparenz der dem Bediener zugewandten obersten Deckschicht sind solche optische Beeinträchtigungen für den Bediener sichtbar und werden als qualitative Beeinträchtigung wahrgenommen.

Aus der DE 10 2018 124891 A1 ist ein Sichtteil gemäß dem Oberbegriff des Anspruchs 1 bekannt. Gattungsgemäße Sichtteile sind ferner aus der DE 10 2017 120152 A1 sowie der DE 10 2010 033206 A1 bekannt.

Vor diesem Hintergrund bestand Bedarf nach einem gattungsgemäßen Sichtteil, bei dem ein verbesserter Schutz und/oder mechanische Stabilisierung des zum Sichtteil gehörenden Schichtaufbaus erreicht ist. Diese Aufgabe wird durch ein Sichtteil gemäß Anspruch 1 gelöst. Ein gleichermaßen vorteilhaftes Herstellungsverfahren ist Gegenstand des nebengeordneten Anspruchs. Vorteilhafte Ausgestaltungen sind jeweils Gegenstand der abhängigen Ansprüche. Es ist darauf hinzuweisen, dass die in den Ansprüchen einzeln aufgeführten Merkmale in beliebiger, technologisch sinnvoller Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Das erfindungsgemäße Sichtteil ist für ein Bedienteil oder eine Zierblende, insbesondere zur Verwendung in einem Kraftfahrzeug, beispielsweise zur Anordnung in der Fahrgastzelle bestimmt. Das erfindungsgemäße Sichtteil weist einen Schichtaufbau mit der nachfolgend benannten Schichtfolge von Schichten auf, wobei die Schichten untereinander jeweils mindestens eine Grenzfläche zu einer der anderen verbleibenden Schichten aufweist. Der Schichtaufbau weist eine untere, bevorzugt opake, Trägerschicht auf. Als "unten" ist eine bei bestimmungsgemäßer Anordnung des Sichtteils sich ergebende Anordnung der Trägerschicht gemeint, die sich aus der Ausrichtung des Schichtaufbaus bezüglich des Bedieners bzw. Betrachters ergibt und somit mit "unten" bzw. "darunter" lediglich eine dem Bediener im Vergleich zu den verbliebenden Schichten entfernte oder abgewandte Anordnung der betreffenden Schicht, hier der Trägerschicht gemeint ist. Anders ausgedrückt: Der Begriff "unten" soll somit keine Anordnung oder Ausrichtung bezüglich des Schwerefelds implizieren, sondern sich lediglich auf die Anordnung aus dem Blickwinkel des Bedieners bzw. des Betrachters beziehen. Der Schichtaufbau umfasst ferner eine Dekorschicht sowie eine obere transluzente oder transparente Deckschicht. Beispielsweise ist die Dekorschicht zwischen der Trägerschicht und der Deckschicht angeordnet, wobei die Dekorschicht mit der dem Bediener abgewandten Seite an die darunter angeordnete Trägerschicht angrenzt und mit der dem Bediener zugewandten Seite an die darüber angeordnete Deckschicht angrenzt und dabei jeweils eine Grenzfläche ausbildet. Bevorzugt sind die Schichten des Schichtaufbaus stoffschlüssig verbunden.

Der Schichtaufbau weist dabei eine Stirnfläche auf, in der ein Zugang zu wenigstens einer der Grenzflächen mündet. Anders ausgedrückt, an der Stirnfläche ist der Zugang zu wenigstens einer der Grenzflächen, beispielsweise zwischen Deckschicht und Dekorschicht und/oder zwischen Trägerschicht und Dekorschicht und/oder, sofern vorhanden, zwischen Deckschicht und Trägerschicht freigegeben. Erfindungsgemäß bildet die Trägerschicht gegenüber den oberen Schichten des Schichtaufbaus einen Überstand aus, d.h. die Trägerschicht bildet einen podestförmigen Vorsprung an der Stirnseite des Schichtaufbaus aus. Als Stirnfläche des Schichtaufbaus wird eine die zwei parallel gegenüberliegenden Hauptflächen verbindende und mit diesen jeweils gemeinsame Kanten ausbildende Oberfläche am Rande des Schichtaufbaus verstanden.

Erfindungsgemäß weist das Sichtteil ferner eine obere transparente, die Deckschicht und die Stirnfläche ganz oder teilweise bedeckende Schutzlackschicht auf, die bei bestimmungsgemäßer Anbringung des Sichtteils eine dem Betrachter zugewandte oberste Oberfläche, auch Sichtfläche genannt, ausbildet. Erfindungsgemäß bedeckt diese Schutzlackschicht den Zugang zu der wenigstens einen Grenzfläche. Dadurch, dass die Schutzlackschicht den Zugang überdeckt, wird eine Stabilisierung und Abdichtung des Schichtaufbaus im Bereich der Grenzfläche erreicht. Das Eindringen von Flüssigkeiten oder Fremdkörpern wird vermieden. Die vorstehende Trägerschicht sorgt dabei für eine vergleichsweise ausgedehnte Haftfläche für die Schutzlackschicht, die dabei eine Erstreckung parallel zu den Hauptflächen des Schichtaufbaus und somit senkrecht zu den Stapelrichtungen des Schichtaufbaus hat, was bewirkt, dass die Schutzlackschicht an den Stirnflächen des Schichtaufbaus vergleichsweise sicher verhaftet ist. Darüber hinaus wird die Schutzlackschicht üblicherweise im fließfähigen Zustand aufgetragen, was aufgrund des Benetzungsverhaltens gegenüber den Schichten des Schichtaufbaus, die beispielsweise jeweils aus einem Thermoplast ausgebildet sind, dazu führt, dass im Bereich über dem Zugang, wo die überstehende Trägeroberfläche beispielsweise im rechten Winkel zu den Stirnflächen der verbleibenden Schichten des Schichtaufbaus steht, die Decklackschicht eine im Schnitt keilförmige, entlang der Stirnfläche verlaufende Dichtleiste, welche kurz als Keil bezeichnet wird, ausbildet, wodurch eine besonders haltbare Abdichtung und Bedeckung des Zugangs erreicht wird.

Bevorzugt ist die Dekorschicht eine Folie, wie eine Polyethylen-Folie oder eine Polycarbonat-Folie. Bevorzugter ist die Folie mit einem Dekor wenigstens einseitig bedruckt.

Bevorzugt ist die Trägerschicht aus einem Kunststoff, bevorzugter aus einem Thermoplast ausgebildet.

Bevorzugt ist die Deckschicht aus einem Kunststoff, bevorzugter Thermoplast, ausgebildet.

Bevorzugt ist der Schichtaufbau durch ein thermisch formgebendes Verfahren, bevorzugter ein Folienhinterspritzverfahren, hergestellt. Noch bevorzugter wurde beim Folienhinterspritzen die Folie in mehreren zeitlich abfolgenden Schritten mehrseitig hinterspritzt, um den Schichtaufbau zu erzeugen.

Bevorzugt ist die Schutzlackschicht im Sprühauftrag aufgebracht.

Bevorzugt ist die Schutzlackschicht derart ausgebildet, beispielsweise durch Wahl der Benetzungseigenschaften und/oder durch Wahl des Auftrags des Schutzlacks, dass eine maximale Schichtdicke im Bereich der Stirnfläche, bevorzugt im Bereich des Zugangs, ausgebildet ist.

Bevorzugt bedeckt die Schutzlackschicht die gesamten Stirnflächen des Schichtaufbaus, beispielsweise sind die Stirnflächen der Trägerschicht, der Dekorschicht und der Deckschicht mit der Schutzlackschicht bedeckt, um den Zugang luftdicht und/oder flüssigkeitsdicht zu verschließen.

Bevorzugt bildet die Schutzlackschicht einen den Zugang bedeckenden, auf dem Überstand der Trägerschicht aufsitzenden Keil aus. Dies wird beispielsweise wie folgt erreicht: Die Schutzlackschicht wird üblicherweise im fließfähigen Zustand aufgetragen, was aufgrund des Benetzungsverhaltens gegenüber den Schichten des Schichtaufbaus, die beispielsweise jeweils aus einem Thermoplast ausgebildet sind, dazu führt, dass im Bereich über dem Zugang, wo die überstehende Trägeroberfläche beispielsweise im rechten Winkel zu den Stirnflächen der verbleibenden Schichten des Schichtaufbaus steht, so dass die Decklackschicht eine im Schnitt keilförmige Dichtleiste, hier als Keil bezeichnet, über dem Zugang ausbildet, wodurch eine besonders haltbare Abdichtung und Bedeckung des Zugangs erreicht wird.

Bevorzugt ist die Bemaßung des Überstands an die Schichtdicke der Dekorschicht und/oder die Viskosität und/oder die Oberflächenspannung des Schutzlackes während des Auftrags der Schutzlacksicht angepasst.

Bevorzugt beträgt das Maß des Überstands gegenüber allen verbleibenden Schichten des Schichtaufbaus nicht mehr als 0,3 mm, bevorzugter nicht mehr als 0,2 mm,

Die Erfindung betrifft ferner ein Verfahren zur Herstellung eines Sichtteils für ein Bedienteil oder eine Zierblende, insbesondere zur Verwendung in einem Kraftfahrzeug, welches folgende Schritte aufweist:
In einem Herstellungsschritt erfolgt ein Herstellen eines Schichtaufbau mit folgender Schichtfolge von Schichten unter Ausbildung von Grenzflächen zwischen den Schichten, eine untere, bevorzugt opake, Trägerschicht; eine obere transluzente oder transparente Deckschicht; eine zwischen Trägerschicht und Deckschicht angeordnete Dekorschicht. Als "unten" ist eine bei bestimmungsgemäßer Anordnung des Sichtteils sich ergebende Anordnung der Trägerschicht gemeint, die sich aus der Ausrichtung des Schichtaufbaus bezüglich des Bedieners bzw. Betrachters ergibt und somit mit "unten" bzw. "darunter" lediglich eine dem Bediener im Vergleich zu den verbliebenden Schichten entfernte oder abgewandte Anordnung der betreffenden Schicht, hier der Trägerschicht gemeint ist. Anders ausgedrückt: Der Begriff "unten" soll somit keine Anordnung oder Ausrichtung bezüglich des Schwerefelds implizieren, sondern sich lediglich auf die Anordnung aus dem Blickwinkel des Bedieners bzw. des Betrachters beziehen. Der Schichtaufbau umfasst ferner eine Dekorschicht sowie eine obere transluzente oder transparente Deckschicht. Beispielsweise ist die Dekorschicht zwischen der Trägerschicht und der Deckschicht angeordnet, wobei die Dekorschicht mit der dem Bediener abgewandten Seite an die darunter angeordnete Trägerschicht angrenzt und mit der dem Bediener zugewandten Seite an die darüber angeordnete Deckschicht angrenzt und dabei jeweils eine Grenzfläche ausbildet.

Der Schichtaufbau weist erfindungsgemäß eine Stirnfläche auf, in der ein Zugang zu wenigstens einer der Grenzflächen mündet. Anders ausgedrückt, an der Stirnfläche ist der Zugang zu wenigstens einer der Grenzflächen, beispielsweise zwischen Deckschicht und Dekorschicht und/oder zwischen Trägerschicht und Dekorschicht und/oder, sofern vorhanden, zwischen Deckschicht und Trägerschicht freigegeben.

Erfindungsgemäß bildet die Trägerschicht gegenüber den oberen Schichten des Schichtaufbaus einen Überstand aus, d.h. die Trägerschicht bildet einen podestförmigen Vorsprung an der Stirnseite des Schichtaufbaus aus. Als Stirnfläche des Schichtaufbaus wird eine die zwei parallel gegenüberliegenden Hauptflächen verbindende und mit diesen jeweils gemeinsame Kanten ausbildende Oberfläche am Rande des Schichtaufbaus verstanden.

Erfindungsgemäß erfolgt dem Herstellungsschritt ein Aufbringschritt nach, bei dem ein Aufbringen einer oberen transparenten, die Deckschicht und die Stirnfläche bedeckenden Schutzlackschicht derart aufgebracht, dass diese bei bestimmungsgemäßer Anbringung des Sichtteils eine dem Betrachter zugewandte oberste Oberfläche ausbildet und wobei die Schutzlackschicht den Zugang bedeckt.

Dadurch, dass die Schutzlackschicht den Zugang überdeckt, wird eine Stabilisierung und Abdichtung des Schichtaufbaus im Bereich der Grenzfläche erreicht. Das Eindringen von Flüssigkeiten oder Fremdkörpern wird vermieden. Die vorstehende Trägerschicht sorgt dabei für eine vergleichsweise ausgedehnte Haftfläche für die Schutzlackschicht, die dabei eine Erstreckung parallel zu den Hauptflächen des Schichtaufbaus und somit senkrecht zu den Stapelrichtungen des Schichtaufbaus hat, was bewirkt, dass die Schutzlackschicht an den Stirnflächen des Schichtaufbaus vergleichsweise sicher verhaftet ist. Darüber hinaus wird die Schutzlackschicht üblicherweise im fließfähigen Zustand aufgetragen, was aufgrund des Benetzungsverhaltens gegenüber den Schichten des Schichtaufbaus, die beispielsweise jeweils aus einem Thermoplast ausgebildet sind, dazu führt, dass im Bereich über dem Zugang, wo die überstehende Trägeroberfläche beispielsweise im rechten Winkel zu den Stirnflächen der verbleibenden Schichten des Schichtaufbaus steht, so dass die Decklackschicht eine im Schnitt keilförmige, entlang der Stirnfläche verlaufende Dichtleiste, welche kurz als Keil bezeichnet wird, ausbildet, wodurch eine besonders haltbare Abdichtung und Bedeckung des Zugangs erreicht wird.

Gemäß einer bevorzugten Variante des Verfahrens ist die Dekorschicht eine Folie, wie eine Polyethylen-Folie oder eine Polycarbonat-Folie.

Die Trägerschicht ist gemäß einer bevorzugten Ausführungsform des Verfahrens aus einem Kunststoff, bevorzugter aus einem Thermoplast ausgebildet.

Bevorzugt ist die Deckschicht aus einem Kunststoff, bevorzugt Thermoplast, ausgebildet.

Gemäß einer bevorzugten Variante des Verfahrens wird der im Herstellungsschritt erzeugte Schichtaufbau durch ein thermisch formgebendes Verfahren, wie ein Folienhinterspritzverfahren, hergestellt. Noch bevorzugter wird beim Folienhinterspritzen die Folie in mehreren zeitlich abfolgenden Schritten mehrseitig hinterspritzt.

Gemäß einer bevorzugten Ausführungsform wird die Schutzlackschicht im Aufbringschritt im Sprühauftrag aufgebracht.

Bevorzugt ist der Aufbringschritt derart ausgebildet, beispielsweise durch Wahl der Benetzungseigenschaften und/oder durch Wahl des Auftrags des Schutzlacks, dass eine maximale Schichtdicke im Bereich der Stirnfläche, bevorzugt im Bereich des Zugangs, ausgebildet ist.

Bevorzugt bedeckt die Schutzlackschicht nach dem Aufbringen im Aufbringschritt die gesamten Stirnflächen des Schichtaufbaus, beispielsweise sind die Stirnflächen der Trägerschicht, der Dekorschicht und der Deckschicht mit der Schutzlackschicht bedeckt, um den Zugang luftdicht und/oder flüssigkeitsdicht zu verschließen.

Gemäß einer bevorzugten Variante des Verfahrens ist vorgesehen, dass nach dem Aufbringen im Aufbringschritt die Schutzlackschicht einen den Zugang bedeckenden, auf dem Überstand der Trägerschicht aufsitzenden Keil ausbildet. Dies wird beispielsweise wie folgt erreicht: Die Schutzlackschicht wird üblicherweise im fließfähigen Zustand aufgetragen, was aufgrund des Benetzungsverhaltens gegenüber den Schichten des Schichtaufbaus, die beispielsweise jeweils aus einem Thermoplast ausgebildet sind, dazu führt, dass im Bereich über dem Zugang, wo die überstehende Trägeroberfläche beispielsweise im rechten Winkel zu den Stirnflächen der verbleibenden Schichten des Schichtaufbaus steht, so dass die Decklackschicht eine im Schnitt keilförmige Dichtleiste, hier als Keil bezeichnet, über dem Zugang ausbildet, wodurch eine besonders haltbare Abdichtung und Bedeckung des Zugangs erreicht wird. Bevorzugt ist die Bemaßung des Überstands an die Schichtdicke der Dekorschicht und/oder die Viskosität und/oder die Oberflächenspannung des Schutzlackes während des Aufbringens der Schutzlacksicht angepasst.

Bevorzugt beträgt das Maß des Überstands der Trägerschicht gegenüber allen verbleibenden Schichten des Schichtaufbaus nicht mehr als 0,3 mm, bevorzugter nicht mehr als 0,2 mm.

Die Erfindung wird anhand der nachfolgenden Figuren näher erläutert. Die Figuren sind dabei nur beispielhaft zu verstehen und stellen eine lediglich bevorzugte Ausführungsvariante dar. Es zeigen:
- Fig. 1: eine perspektivische Ansicht einer Ausführungsform des erfindungsgemäßen und nach dem erfindungsgemäßen Verfahren hergestellten Sichtteils 1;
- Fig. 2: eine schematische Teilschnittansicht eines Sichtteils 1 gemäß dem Stand der Technik;
- Fig. 3: eine schematische Teilschnittansicht eines Sichtteils 1 gemäß einer ersten erfindungsgemäßen Ausführungsform;
- Fig. 4: eine schematische Teilschnittansicht eines Sichtteils 1 gemäß einer zweiten erfindungsgemäßen Ausführungsform.

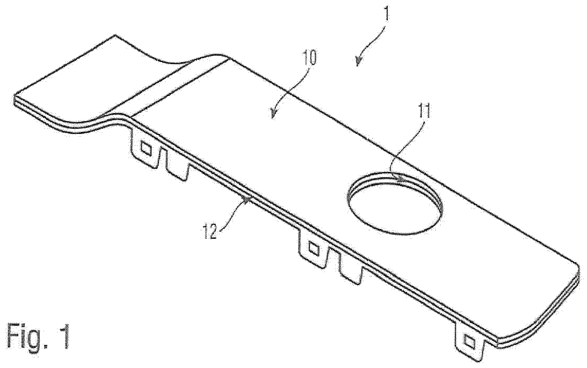

Figur 1 zeigt das erfindungsgemäße Sichtteil 1 in perspektivischer Aufsicht. Das erfindungsgemäße Sichtteil 1 ist für ein Bedienteil oder eine Zierblende, insbesondere zur Verwendung in einem Kraftfahrzeug, beispielsweise zur Anordnung in der Fahrgastzelle bestimmt und weist daher eine dem Bediener bzw. Betrachter zugewandte, oberste Oberfläche 10, auch Sichtfläche genannt auf. Auf der der obersten Oberfläche 10 abgewandten Seite weist das Sichtteil Befestigungsmittel, wie Rastnasen oder Rastausnehmungen zur Festlegung an einem Träger oder Fahrzeugkomponente auf. Das Sichtteil 1 weist einen in Figur nicht näher bezeichnenden Schichtaufbau und eine diesen Schichtaufbau bedeckende Schutzlackschicht auf. Das Sichtteil 1 bildet am äußeren Umfang der obersten Oberfläche 10 eine erste Stirnfläche 11 sowie an der einen Durchbruch begrenzenden Kante jeweils eine zweite Stirnfläche 12 aus. Die Erfindung betrifft im Wesentlichen die Ausgestaltung des Schichtaufbaus und den der Schutzlackschicht im Bereich der beiden Stirnflächen 11, 12. Nachfolgend wird der erfindungsgemäße Aufbau jeweils in Bezug auf die erste Stirnfläche 11 beschrieben, das Beschriebene gilt aber gleichermaßen für die zweite Stirnfläche 12.

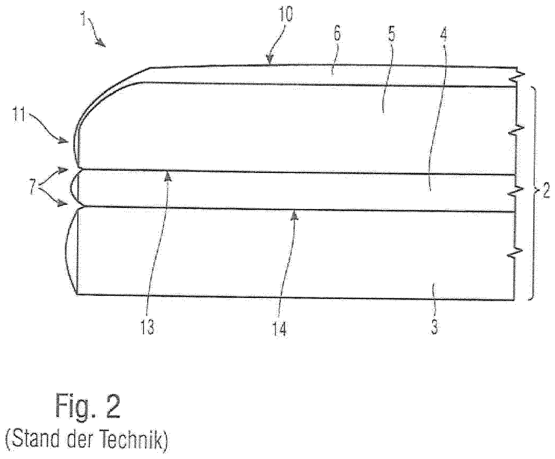

Im Folgenden wird zuerst der Aufbau eines nicht erfindungsgemäßen Sichtteils 1 in Bezug auf Figur 2 beschrieben. Das vorbekannte Sichtteil 1 weist einen Schichtaufbau 2 mit der nachfolgend benannten Schichtfolge von Schichten 3, 4, 5 auf, wobei die Schichten 3, 4, 5 untereinander jeweils mindestens eine Grenzfläche 13, 14 zu einer der anderen verbleibenden Schichten 3, 4, 5 aufweist. Der Schichtaufbau weist eine untere Trägerschicht 3 auf. Als "unten" ist eine bei bestimmungsgemäßer Anordnung des Sichtteils 1 sich ergebende Anordnung der Trägerschicht 3 gemeint, die sich aus der Ausrichtung des Schichtaufbaus 2 bezüglich des Bedieners bzw. Betrachters ergibt und somit mit "unten" bzw. "darunter" lediglich eine dem Bediener im Vergleich zu den verbliebenden Schichten 4, 5 entfernte oder abgewandte Anordnung der Trägerschicht 3 gemeint ist. Der Schichtaufbau 1 umfasst ferner eine Dekorschicht 4 sowie eine obere transluzente oder transparente Deckschicht 5. Die Dekorschicht 4 ist zwischen der Trägerschicht 3 und der Deckschicht 5 angeordnet, wobei die Dekorschicht 4 mit der dem Bediener abgewandten Seite an die darunter angeordnete Trägerschicht 3 unter Ausbildung einer ersten gemeinsamen Grenzfläche 14 angrenzt und mit der dem Bediener zugewandten Seite an die darüber angeordnete Deckschicht 5 unter Ausbildung einer zweiten gemeinsamen Grenzfläche 13 angrenzt. Die transparente Deckschicht 5 ermöglicht dem Bediener bzw. Betrachter die freie Sicht auf die Dekorschicht 4, die ein mittels Bedruckung, Prägung und/oder Beschichtung erzeigtes Dekor aufweist. Die transparente Deckschicht 5 soll dabei eine optische Tiefenwirkung, ähnlich dem einer Schicht aus einem Glaswerkstoff, erzeugen.

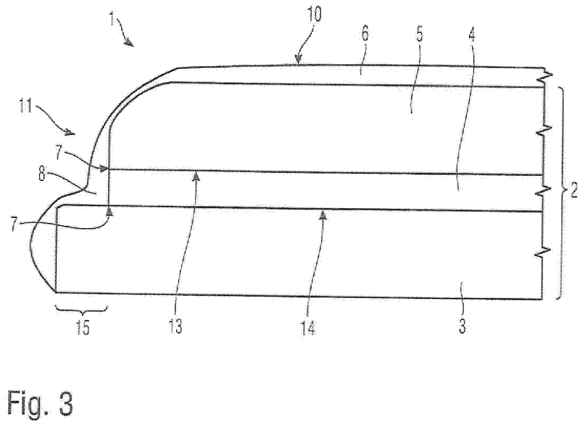

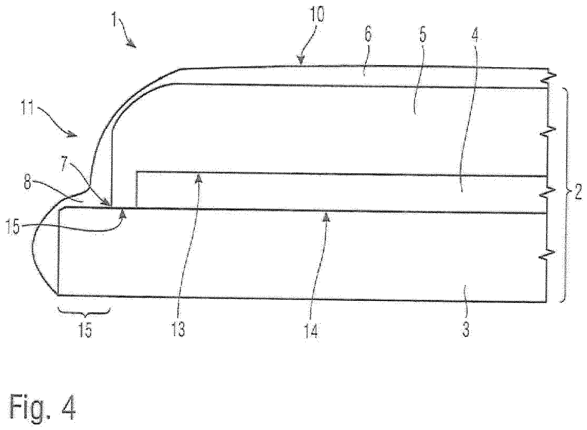

Der Schichtaufbau 2 weist dabei eine erste Stirnfläche 11 auf, in der ein jeweils ein Zugang 7 zur ersten Grenzfläche 14 bzw. zur zweiten Grenzfläche 13 mündet. Anders ausgedrückt, an der Stirnfläche 11 ist der Zugang 7 zur ersten Grenzfläche 14 zwischen der Trägerschicht 3 und der Dekorschicht 4 und der Zugang zur zweiten Grenzfläche 13 zwischen der Deckschicht 5 und der Dekorschicht 4 freigegeben. Zwar ist bei der Lösung des Standes der Technik zum Oberflächenschutz der Deckschicht 5 eine transparente Decklackschicht 6 im Sprühverfahren aufgebracht, diese bildet aber an der Stirnfläche 11 aufgrund der Oberflächenspannung und/oder der Benetzungseigenschaften der am Schichtaufbau 2 verwendeten Materialien keine geschlossene Oberfläche aus, vielmehr verbleiben aufgrund der oberflächenspannungsbedingten Kantenflucht des Decklackes die Zugänge 7 zu den Grenzflächen 13, 14 offen, was problematisch ist, da Fremdkörper und Flüssigkeiten eindringen können und eine wandernde, optisch wahrnehmbare Separierung der Schichten 3, 4, 5 an den Grenzflächen 13, 14 von den Stirnflächen 11, 12 ausgehend einsetzen kann. Ein weiteres Problem ergibt sich aus dem üblicherweise verwendeten Herstellungsverfahren für derartige Sichtteile 1: Diese werden in der Regel durch ein mehrschrittiges Verfahren, insbesondere ein mehrschrittiges Spritzformverfahren, insbesondere ein mehrseitiges Hinterspritzen einer Folie, hergestellt. Zunächst wird die die Dekorschicht 4 ausbildende Folie in ein Spritzgusswerkzeug eingelegt und mit einem ersten transparenten Kunststoff vollflächig hinterspritzt, so dass die transparente Deckschicht 5 sich ausbildet, die stoffschlüssig mit der Dekorschicht 4 verbunden ist. Anschließend wird das halbfertige Sichtteil 1 mittels einer weiteren Werkzeughälfte ein zweites Mal mit einem zweiten, opaken Kunststoff hinterspritzt, um die Trägerschicht 3 zu erhalten, die stoffschlüssig mit der Dekorschicht 4 verbunden ist, oder in umgekehrter Reihenfolge. Üblicherweise ist der Schichtaufbau 2 so gestaltet, dass an den die Hauptflächen des Schichtaufbaus 2 verbindenden Stirnflächen 11, 12 die jeweiligen Schichten 3, 4, 5 (im Rahmen der Produktionstoleranzen) bündig abschließen, d.h. in einer gemeinsamen Ebene liegen und so eine "glatte", "ebene" Stirnfläche 11 ergeben, wie Fig. 2 zeigt. Beim oben beschriebenen Herstellungsprozess entstehen Spannungen innerhalb des Sichtteils 1, was insbesondere bei größeren, länglichen Sichtteilen 1 problematisch ist. Weitere Verstärkungsfaktoren für innere Spannungen sind "Engpässe" in Fließrichtung der Kunststoffmasse und eine gekrümmte Geometrie, da in diesen Fällen mit sehr hohem Druck und dementsprechend großen Druckdifferenzen innerhalb des Werkzeugs gearbeitet werden muss. Die Spannungen wirken sich insbesondere im Bereich der zweiten Grenzfläche 13 zwischen Deckschicht 5 und Dekorschicht 4 sowie im Bereich der ersten Grenzfläche 14 zwischen Dekorschicht 4 und Trägerschicht 3 aus. Werden die Spannungen in diesem Bereich zu groß, lösen sich die Schichten 3, 4, 5 hier voneinander unter Ausbildung von Spannungsrisskorrosion. Die so entstehenden Fehlstellen können durch einen Betrachter durch die transparente Deckschicht 5 gesehen werden und erscheinen weißlich. Ein Verstärkungsfaktor für die Spannungsrisskorrosion entsteht durch den Herstellungsprozess selbst. Durch das Schließen des Werkzeugs vor dem zweiten Spritzgießvorgang kann es im Bereich der Hauptflächen des Schichtaufbaus 2 zu Verstärkungen der inneren Verspannungen des Sichtteils 1 kommen. Denn durch ungenaues Positionieren (Toleranzen) kann durch das Werkzeughälfte ein Druck aufgebaut werden. Da die Bildung von Spannungsrisskorrosion durch den Einfluss Iösungsmittelhaltiger Fremdstoffe (z.B. Sonnencreme, Desinfektionsmittel), welche von außen in die Grenzfläche 13, 14 zwischen jeweils zwei Schichten 3, 4, 5 eindringen, ist es Ziel der erfindungsgemäßen Lösung dieses Eindringen zu verhindern. Um die einen Schichtaufbau 2 aufweisende Sichtteile 1 vor dem Einfluss diese Fremdstoffe zu schützen, muss der die Schutzlackschicht 6 ausbildende Schutzlack verbessert aufgetragen werden und die durch die Oberflächenspannung hervorgerufene Kantenflucht des Schutzlacks vermieden werden, ansonsten ist Schutz im Bereich des Zugangs 7 zu den Grenzflächen 13, 14 nicht gegeben. Wie die Figuren 3 und 4 zeigen, wird das Problem dadurch gelöst, dass die Trägerschicht 3 gegenüber den oberen Schichten 4, 5 des Schichtaufbaus 2 einen Überstand 15 ausbildet, d.h. mit einem podestförmigen Vorsprung 15 übersteht und die Decklackschicht 6 die Zugänge 7 oder den Zugang 7 zu den Grenzflächen 13, 14, 15 bedeckt. Durch den Überstand 15 wird die Kantenflucht des Decklacks der Decklackschicht 6 unterbunden.

Durch die die Zugänge 7 bedeckende Schutzlackschicht 6 wird eine Stabilisierung und Abdichtung des Schichtaufbaus 2 im Bereich der Grenzflächen 13, 14 erreicht. Das Eindringen von Flüssigkeiten oder Fremdkörpern wird vermieden. Die vorstehende Trägerschicht 3 sorgt dabei für eine vergleichsweise ausgedehnte Haftfläche für die Schutzlackschicht 6, die dabei eine Erstreckung parallel zu den Hauptflächen des Schichtaufbaus 2 und somit senkrecht zu den Stapelrichtungen des Schichtaufbaus hat, was bewirkt, dass die Schutzlackschicht 6 an den Stirnflächen 11, 12 des Schichtaufbaus 2 vergleichsweise sicher verhaftet ist. Darüber hinaus wird die Schutzlackschicht 6 im fließfähigen Zustand, beispielsweise im Sprühauftrag, aufgetragen, was aufgrund des Benetzungsverhaltens gegenüber den Schichten 3, 4, 5 des Schichtaufbaus 2 dazu führt, dass im Bereich über dem oder den Zugängen 7, wo die überstehende Oberfläche der Trägerschicht 3 beispielsweise im rechten Winkel zu den Stirnflächen der verbleibenden Schichten 4, 5 des Schichtaufbaus 2 steht, die Decklackschicht 6 eine im Schnitt keilförmige, umlaufende Dichtleiste, als Keil 8 bezeichnet, über dem oder den Zugängen 7 ausbildet, wodurch eine besonders haltbare Abdichtung und Bedeckung des oder der Zugänge 7 erreicht wird.

Aus optischen Gründen soll der Überstand 15 jedoch so schmal wie möglich ausfallen. Die minimal mögliche Breite des Überstands 15 ergibt sich aus der Viskosität und Oberflächenspannung des Decklacks der Decklackschicht 6 und der Dicke der Dekorschicht 4, beispielsweise der für die Dekorschicht 4 verwendeten Folie. Es hat sich gezeigt, dass bei einer Dicke der Dekorschicht 4 von maximal 0,5 mm ein Überstand 15 der Trägerschicht 3 gegenüber den oberen Schichten 4, 5 von 0,2 mm ausreichend ist. Bevorzugt gilt für das Maß des Überstands 15 des Vorsprungs Folgendes: halbe Dekorschichtdicke < Maß des Überstands < doppelte Dekorschichtdicke. Fig. 4 zeigt eine zweite Ausführungsform, welche Aufgrund von Toleranzen auch parallel mit der ersten Ausführungsform an ein und demselben Sichtteil 1 verwirklicht sein kann. Hier ist die Dekorschicht 4 bezüglich ihrer flächigen Ausdehnung minimal kleiner als die Deckschicht 5. In diesem Fall sollte die Farbe der Trägerschicht 3 sehr ähnlich zur Farbe des Dekors der Dekorschicht 4 gewählt sein, ansonsten ist dieser schmale Rand für den Betrachter sichtbar.

## Patentansprüche

1. Sichtteil (1) für ein Bedienteil oder eine Zierblende, insbesondere zur Verwendung in einem Kraftfahrzeug, aufweisend einen Schichtaufbau (2) mit folgender Schichtfolge von Schichten (3, 4, 5) unter Ausbildung von Grenzflächen (13, 14):
eine untere, bevorzugt opake, Trägerschicht (3);
eine Dekorschicht (4);
eine obere transluzente oder transparente Deckschicht (5);
wobei der Schichtaufbau (2) eine Stirnfläche (11, 12) ausbildet, in der ein Zugang (7) zu wenigstens einer Grenzfläche (13, 14) mündet,
**dadurch gekennzeichnet, dass** die Trägerschicht (3) gegenüber den oberen Schichten (4, 5) des Schichtaufbaus (2) einen Überstand (15) ausbildet; und
dass das Sichtteil (1) ferner eine obere transparente, die Deckschicht (5) und die Stirnfläche (11, 12) bedeckende Schutzlackschicht (6) aufweist, die bei bestimmungsgemäßer Anbringung des Sichtteils (1) eine dem Betrachter zugewandte oberste Oberfläche (10) ausbildet und den Zugang (7) bedeckt.

2. Sichtteil (1) gemäß Anspruch 1, wobei die Dekorschicht (4) eine Folie, wie eine Polyethylen-Folie oder eine Polycarbonat-Folie aufweist.

3. Sichtteil (1) gemäß einem der vorhergehenden Ansprüche, wobei die Trägerschicht (3) aus einem Kunststoff, bevorzugt aus einem Thermoplast ausgebildet ist.

4. Sichtteil (1) gemäß einem der vorhergehenden Ansprüche, wobei die Deckschicht (5) aus einem Kunststoff, bevorzugt Thermoplast, ausgebildet ist.

5. Sichtteil (1) gemäß einem der vorhergehenden Ansprüche, wobei der Schichtaufbau (2) durch ein thermisch formgebendes Verfahren, wie ein Folienhinterspritzverfahren, hergestellt ist.

6. Sichtteil (1) gemäß einem der vorhergehenden Ansprüche, wobei die Schutzlackschicht (6) im Sprühauftrag aufgebracht ist.

7. Sichtteil (1) gemäß einem der vorhergehenden Ansprüche, wobei die Schutzlackschicht (6), eine maximale Schichtdicke im Bereich der Stirnfläche (11, 12), bevorzugt im Bereich des Zugangs (7) aufweist.

8. Sichtteil (1) gemäß einem der vorhergehenden Ansprüche, wobei die gesamten Stirnflächen (11, 12) des Schichtaufbaus (7) mit der Schutzlackschicht (6) bedeckt sind, um den Zugang (7) luftdicht und/oder flüssigkeitsdicht zu verschließen.

9. Sichtteil (1) gemäß einem der vorhergehenden Ansprüche, wobei die Schutzlackschicht (6) einen den Zugang (7) bedeckenden, auf dem Überstand (15) aufsitzenden Keil (8) ausbildet.

10. Sichtteil (1) gemäß einem der vorhergehenden Ansprüche, wobei die Bemaßung des Überstands (15) an die Schichtdicke der Dekorschicht (4) und/oder die Viskosität und/oder die Oberflächenspannung des Schutzlackes während des Auftrags der Schutzlackschicht (6) angepasst ist.

11. Sichtteil (1) gemäß einem der vorhergehenden Ansprüche, wobei das Maß des Überstands (15) nicht mehr als 0,3 mm beträgt, bevorzugt nicht mehr als 0,2 mm beträgt.

12. Verfahren zur Herstellung eines Sichtteils (1) für ein Bedienteil oder eine Zierblende, insbesondere zur Verwendung in einem Kraftfahrzeug, aufweisend folgende Schritte:
Herstellen eines Schichtaufbau (2) mit folgender Schichtfolge von Schichten (3, 4, 5) unter Ausbildung von Grenzflächen (13, 14):
eine untere, bevorzugt opake, Trägerschicht (3);
eine Dekorschicht (4);
eine obere transluzente oder transparente Deckschicht (5);
wobei der Schichtaufbau (2) eine Stirnfläche (11, 12) aufweist, in die ein Zugang (7) zu wenigstens einer Grenzfläche (13, 14) mündet,
**dadurch gekennzeichnet, dass** die Trägerschicht (3) gegenüber den oberen Schichten (4, 5) des Schichtaufbaus (2) einen Überstand (15) ausbildet; und
durch den Schritt des Aufbringens einer oberen transparenten, die Deckschicht (5) und die Stirnfläche (11, 12) bedeckenden Schutzlackschicht (6), die bei bestimmungsgemäßer Anbringung des Sichtteils (1) eine dem Betrachter zugewandte oberste Oberfläche (10) ausbildet und wobei die Schutzlackschicht (6) den Zugang (7) bedeckt.

13. Verfahren gemäß Anspruch 12, wobei die Dekorschicht (4) eine Folie, wie eine Polyethylen-Folie oder eine Polycarbonat-Folie aufweist.

14. Verfahren gemäß einem der vorhergehenden Ansprüche 12 oder 13, wobei die Trägerschicht (3) aus einem Kunststoff, bevorzugt aus einem Thermoplast ausgebildet ist.

15. Verfahren gemäß einem der vorhergehenden Ansprüche 12 bis 14, wobei die Deckschicht (5) aus einem Kunststoff, bevorzugt Thermoplast, ausgebildet ist.

16. Verfahren gemäß einem der vorhergehenden Ansprüche 12 bis 15, wobei der Schichtaufbau (2) durch ein thermisch formgebendes Verfahren, wie ein Folienhinterspritzverfahren, hergestellt wird.

17. Verfahren gemäß einem der vorhergehenden Ansprüche 12 bis 16, wobei die Schutzlackschicht (6) im Sprühauftrag aufgebracht wird.

18. Verfahren gemäß einem der vorhergehenden Ansprüche 12 bis 17, wobei die Schutzlackschicht (6), eine maximale Schichtdicke im Bereich der Stirnfläche (11, 12), bevorzugt im Bereich des Zugangs (7) aufweist.

19. Verfahren gemäß einem der vorhergehenden Ansprüche 12 bis 18, wobei die gesamten Stirnflächen (11, 12) des Schichtaufbaus (2) mit der Schutzlackschicht (6) bedeckt sind, um den Zugang (7) luftdicht und/oder flüssigkeitsdicht zu verschließen.

20. Verfahren gemäß einem der vorhergehenden Ansprüche 12 bis 19, wobei die Schutzlackschicht (6) so aufgebracht wird, dass sie einen den Zugang (7) bedeckenden, auf dem Überstand (15) aufsitzenden Keil (8) ausbildet.

21. Verfahren gemäß einem der vorhergehenden Ansprüche 12 bis 20, wobei die Bemaßung des Überstands (15) an die Schichtdicke der Dekorschicht (4) und/oder die Viskosität und/oder die Oberflächenspannung des Schutzlackes während des Auftrags der Schutzlackschicht (6) angepasst ist.

22. Verfahren gemäß einem der vorhergehenden Ansprüche 12 bis 21, wobei das Maß des Überstands (15) nicht mehr als 0,3 mm beträgt, bevorzugt nicht mehr als 0,2 mm beträgt.

## Claims

1. Visible part (1) for an operating part or a trim panel, more particularly for use in a motor vehicle, comprising a layer structure (2) with the following sequence of layers (3, 4, 5), with formation of interfaces (13, 14):
a lower, preferably opaque, carrier layer (3);
a decorative layer (4);
an upper, translucent or transparent, outer layer (5);
where the layer structure (2) forms an end face (11, 12) in which an access (7) to at least one interface (13, 14) opens out,
**characterized in that** the carrier layer (3) forms a projection (15) relative to the upper layers (4, 5) of the layer structure (2), and
**in that** the visible part (1) additionally comprises an upper transparent protective varnish layer (6) which covers the outer layer (5) and the end face (11, 12) and which when the visible part (1) is mounted as intended forms an uppermost surface (10) facing the observer and covers the access (7).

2. Visible part (1) according to Claim 1, wherein the decorative layer (4) comprises a film, such as a polyethylene film or a polycarbonate film.

3. Visible part (1) according to either of the preceding claims, wherein the carrier layer (3) is formed of a plastic, preferably of a thermoplastic.

4. Visible part (1) according to any of the preceding claims, wherein the outer layer (5) is formed of a plastic, preferably thermoplastic.

5. Visible part (1) according to any of the preceding claims, wherein the layer structure (2) is produced by a process of thermal shaping, such as an in-mould film coating process.

6. Visible part (1) according to any of the preceding claims, wherein the protective varnish layer (6) is applied by spray application.

7. Visible part (1) according to any of the preceding claims, wherein the protective varnish layer (6) has a maximum layer thickness in the region of the end face (11, 12), preferably in the region of the access (7).

8. Visible part (1) according to any of the preceding claims, wherein the entire end faces (11, 12) of the layer structure (2) are covered with the protective layer (6) in order to close off the access (7) in an airtight and/or liquid-tight manner.

9. Visible part (1) according to any of the preceding claims, wherein the protective varnish layer (6) for a wedge (8) which covers the access (7) and is seated on the projection (15).

10. Visible part (1) according to any of the preceding claims, wherein the dimensioning of the projection (15) is adapted to the layer thickness of the decorative layer (4) and/or the viscosity and/or the surface tension of the protective varnish during the application of the protective varnish layer (6).

11. Visible part (1) according to any of the preceding claims, wherein the measure of the projection (15) is not more than 0.3 mm, preferably not more than 0.2 mm.

12. Method for producing a visible part (1) for an operating part or a trim panel, more particularly for use in a motor vehicle, comprising steps as follows:
producing a layer structure (2) with the following sequence of layers (3, 4, 5), with formation of interfaces (13, 14):
a lower, preferably opaque, carrier layer (3);
a decorative layer (4);
an upper, translucent or transparent, outer layer (5);
where the layer structure (2) forms an end face (11, 12) into which an access (7) to at least one interface (13, 14) opens out,
**characterized in that** the carrier layer (3) forms a projection (15) relative to the upper layers (4, 5) of the layer structure (2), and
through the step of application of an upper transparent protective varnish layer (6) which covers the outer layer (5) and the end face (11, 12) and which when the visible part (1) is mounted as intended forms an uppermost surface (10) facing the observer and wherein the protective varnish layer (6) covers the access (7).

13. Method according to Claim 12, wherein the decorative layer (4) comprises a film, such as a polyethylene film or a polycarbonate film.

14. Method according to either of preceding Claims 12 and 13, wherein the carrier layer (3) is formed of a plastic, preferably of a thermoplastic.

15. Method according to any of preceding Claims 12 to 14, wherein the outer layer (5) is formed of a plastic, preferably thermoplastic.

16. Method according to any of preceding Claims 12 to 15, wherein the layer structure (2) is produced by a process of thermal shaping, such as an in-mould film coating process.

17. Method according to any of preceding Claims 12 to 16, wherein the protective varnish layer (6) is applied by spray application.

18. Method according to any of preceding Claims 12 to 17, wherein the protective varnish layer (6) has a maximum layer thickness in the region of the end face (11, 12), preferably in the region of the access (7).

19. Method according to any of preceding Claims 12 to 18, wherein the entire end faces (11, 12) of the layer structure (2) are covered with the protective varnish layer (6) in order to close off the access (7) in an airtight and/or liquid-tight manner.

20. Method according to any of preceding Claims 12 to 19, wherein the protective varnish layer (6) is applied such that it forms a wedge (8) which covers the access (7) and is seated on the projection (15).

21. Method according to any of preceding Claims 12 to 20, wherein the dimensioning of the projection (15) is adapted to the layer thickness of the decorative layer (4) and/or the viscosity and/or the surface tension of the protective varnish during the application of the protective varnish layer (6).

22. Method according to any of preceding Claims 12 to 21, wherein the measure of the projection (15) is not more than 0.3 mm, preferably not more than 0.2 mm.

## Revendications

1. Pièce apparente (1) pour un élément de commande ou un panneau décoratif, en particulier destinée à être utilisée dans un véhicule automobile, présentant une structure stratifiée (2) comprenant la succession suivante de couches (3, 4, 5) avec formation d'interfaces (13, 14) :
une couche support (3) inférieure, de préférence opaque ;
une couche décorative (4) ;
une couche de recouvrement (5) supérieure, translucide ou transparente ;
la structure stratifiée (2) formant une face frontale (11, 12) dans laquelle débouche un accès (7) à au moins une interface (13, 14),
**caractérisée en ce que** la couche support (3) forme une saillie (15) par rapport aux couches supérieures (4, 5) de la structure stratifiée (2) ; et
**en ce que** la pièce apparente (1) présente en outre une couche de laque de protection (6) supérieure, transparente, recouvrant la couche de recouvrement (5) et la face frontale (11, 12), laquelle couche de laque forme une surface supérieure (10) orientée vers l'observateur lors de l'application conforme à sa destination de la pièce apparente (1).

2. Pièce apparente (1) selon la revendication 1, la couche décorative (4) présentant une feuille, telle qu'une feuille de polyéthylène ou une feuille de polycarbonate.

3. Pièce apparente (1) selon l'une quelconque des revendications précédentes, la couche support (3) étant réalisée en un matériau synthétique, de préférence en un thermoplastique.

4. Pièce apparente (1) selon l'une quelconque des revendications précédentes, la couche de recouvrement (5) étant réalisée en un matériau synthétique, de préférence en un thermoplastique.

5. Pièce apparente (1) selon l'une quelconque des revendications précédentes, la structure stratifiée (2) étant fabriquée par un procédé de façonnage thermique, tel qu'un procédé d'injection derrière la feuille.

6. Pièce apparente (1) selon l'une quelconque des revendications précédentes, la couche de laque de protection (6) étant déposée par application par pulvérisation.

7. Pièce apparente (1) selon l'une quelconque des revendications précédentes, la couche de laque de protection (6) présentant une épaisseur de couche maximale dans la zone de la face frontale (11, 12), de préférence dans la zone de l'accès (7).

8. Pièce apparente (1) selon l'une quelconque des revendications précédentes, l'ensemble des faces frontales (11, 12) de la structure stratifiée (7) étant recouvertes par la couche de laque de protection (6) pour fermer l'accès (7) de manière étanche à l'air et/ou aux liquides.

9. Pièce apparente (1) selon l'une quelconque des revendications précédentes, la couche de laque de protection (6) formant une pièce en coin (8) recouvrant l'accès (7) et placée sur la saillie (15).

10. Pièce apparente (1) selon l'une quelconque des revendications précédentes, le dimensionnement de la saillie (15) étant adapté à l'épaisseur de couche de la couche décorative (4) et/ou à la viscosité et/ou à la tension superficielle de la laque de protection pendant l'application de la couche de laque de protection (6).

11. Pièce apparente (1) selon l'une quelconque des revendications précédentes, la dimension de la saillie (15) n'étant pas supérieure à 0,3 mm, de préférence pas supérieure à 0,2 mm.

12. Procédé pour la fabrication d'une pièce apparente (1) pour un élément de commande ou un panneau décoratif, en particulier destinée à être utilisée dans un véhicule automobile, présentant les étapes suivantes :
fabrication d'une structure stratifiée (2) comprenant la succession suivante de couches (3, 4, 5) avec formation d'interfaces (13, 14) :
une couche support (3) inférieure, de préférence opaque ;
une couche décorative (4) ;
une couche de recouvrement (5) supérieure, translucide ou transparente ;
la structure stratifiée (2) présentant une face frontale (11, 12) dans laquelle débouche un accès (7) à au moins une interface (13, 14),
**caractérisé en ce que** la couche support (3) forme une saillie (15) par rapport aux couches supérieures (4, 5) de la structure stratifiée (2) ; et
par l'étape d'application d'une couche de laque de protection (6) supérieure, transparente, recouvrant la couche de recouvrement (5) et la face frontale (11, 12), laquelle couche de laque forme une surface supérieure (10) orientée vers l'observateur lors d'une application conforme à sa destination de la pièce apparente (1) et la couche de laque de recouvrement (6) recouvrant l'accès (7).

13. Procédé selon la revendication 12, la couche décorative (4) présentant une feuille, telle qu'une feuille de polyéthylène ou une feuille de polycarbonate.

14. Procédé selon l'une quelconque des revendications 12 ou 13, la couche support (3) étant réalisée en un matériau synthétique, de préférence en un thermoplastique.

15. Procédé selon l'une quelconque des revendications 12 à 14, la couche de recouvrement (5) étant réalisée en un matériau synthétique, de préférence en un thermoplastique.

16. Procédé selon l'une quelconque des revendications 12 à 15, la structure stratifiée (2) étant fabriquée par un procédé de façonnage thermique, tel qu'un procédé d'injection derrière la feuille.

17. Procédé selon l'une quelconque des revendications 12 à 16, la couche de laque de protection (6) étant déposée par application par pulvérisation.

18. Procédé selon l'une quelconque des revendications 12 à 17, la couche de laque de protection (6) présentant une épaisseur de couche maximale dans la zone de la face frontale (11, 12), de préférence dans la zone de l'accès (7).

19. Procédé selon l'une quelconque des revendications 12 à 18, l'ensemble des faces frontales (11, 12) de la structure stratifiée (7) étant recouvertes par la couche de laque de protection (6) pour fermer l'accès (7) de manière étanche à l'air et/ou aux liquides.

20. Procédé selon l'une quelconque des revendications 12 à 19, la couche de laque de protection (6) étant appliquée de manière telle qu'elle forme une pièce en coin (8) recouvrant l'accès (7) et placée sur la saillie (15).

21. Procédé selon l'une quelconque des revendications 12 à 20, le dimensionnement de la saillie (15) étant adapté à l'épaisseur de couche de la couche décorative (4) et/ou à la viscosité et/ou à la tension superficielle de la laque de protection pendant l'application de la couche de laque de protection (6).

22. Procédé selon l'une quelconque des revendications 12 à 21, la dimension de la saillie (15) n'étant pas supérieure à 0,3 mm, de préférence pas supérieure à 0,2 mm.
